(19) Europäisches Patentamt
European Patent Office
Office européen des brevets

(11) **EP 3 124 523 B1**

(12) **EUROPEAN PATENT SPECIFICATION**

(45) Date of publication and mention of the grant of the patent:
**12.08.2020 Bulletin 2020/33**

(51) Int Cl.:
*C08J 5/18* (2006.01)    *B29C 55/12* (2006.01)
*B32B 15/085* (2006.01)   *H01G 4/18* (2006.01)
*B29K 23/00* (2006.01)    *B29L 7/00* (2006.01)

(21) Application number: **15769076.9**

(22) Date of filing: **23.03.2015**

(86) International application number:
**PCT/JP2015/058699**

(87) International publication number:
**WO 2015/146894 (01.10.2015 Gazette 2015/39)**

(54) **BIAXIALLY ORIENTED POLYPROPYLENE FILM**

BIAXIAL AUSGERICHTETE POLYPROPYLENFOLIE

FILM DE POLYPROPYLÈNE BI-ORIENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2014 JP 2014067695**

(43) Date of publication of application:
**01.02.2017 Bulletin 2017/05**

(73) Proprietor: **Toray Industries, Inc.**
**Tokyo 103-8666 (JP)**

(72) Inventors:
• **IMANISHI, Yasuyuki**
  **Otsu-shi**
  **Shiga 520-8558 (JP)**
• **OKADA, Kazuma**
  **Otsu-shi**
  **Shiga 520-8558 (JP)**
• **OHKURA, Masatoshi**
  **Otsu-shi**
  **Shiga 520-8558 (JP)**
• **KUMA, Takuya**
  **Otsu-shi**
  **Shiga 520-8558 (JP)**

(74) Representative: **Mewburn Ellis LLP**
**Aurora Building**
**Counterslip**
**Bristol BS1 6BX (GB)**

(56) References cited:
EP-A1- 2 168 997          EP-A1- 2 617 758
DE-T5-112008 002 985      JP-A- H0 873 529
JP-A- S4 856 281          JP-A- H10 156 940
JP-A- H10 156 940

**Description**

TECHNICAL FIELD

The present invention relates to a biaxially oriented polypropylene film suitable for use in packagings and industrial applications, and more particularly to a biaxially oriented polypropylene film which is capable of maintaining high voltage resistance and reliability even under a high-temperature environment as a dielectric material for capacitors and which is suitable for use in capacitors.

BACKGROUND ART

Biaxially oriented polypropylene films are excellent in transparency, mechanical characteristics, electrical characteristics and so on, and are therefore used in various applications such as packaging applications, tape applications, and electrical applications including cable wrappings and capacitors.

Among them, biaxially oriented polypropylene films for use in capacitors have an excellent voltage resistance characteristic and low-loss characteristic, and are therefore particularly preferably used for high-voltage capacitors in both direct-current and alternating-current applications.

Recently, application of inverters to various kinds of electrical equipment has been progressed, and accordingly, demand for size reduction and capacity enlargement of capacitors has been further increased. In response to the demand in the market, especially in automobile applications (including hybrid car applications) , and applications of solar power generation and wind power generation, it has become absolutely necessary to further reduce the thickness of biaxially oriented polypropylene films while improving the voltage resistance and maintaining productivity and processability thereof.

In this connection, Patent Document 1 proposes a technique in which in a biaxially oriented polypropylene film for capacitors, two isotactic polypropylene resins having different stereoregularity degrees are used, so that the temperature of crystalline dispersion (transition point in movement of fine crystals) is increased to ensure that the temperature at the tan$\delta$ dynamic dispersion (crystalline dispersion) peak in the film is 80°C or higher.

On the other hand, studies have been conducted to stabilize the elastic modulus of polypropylene films in a high-temperature environment and maintain the storage elastic modulus of polypropylene films (e.g. Patent Documents 2, 3, 4 and 5) .

EP2168997 describes a molded article which alleged has tactility expressed in terms of isotactic pentad fraction of 95 mol% or more; a sheet-shaped polypropylene molded article and a method of manufacturing a polypropylene thermoformed article. EP2617758 describes a film for molding which exhibits excellent dimensional stability during processing. JP-H-10-156940 describes a biaxially oriented polypropylene film and a capacitor. DE112008002985 describes a biaxially stretched polypropylene.

PRIOR ART DOCUMENTS

PATENT DOCUMENTS

Patent Document 1: JJP 2010-280795
Patent Document 2: JP 2003-191324
Patent Document 3: JP 2003-105102
Patent Document 4: JP 2006-82383
Patent Document 5: JP H10-259257

SUMMARY OF THE INVENTION

PROBLEMS TO BE SOLVED BY THE INVENTION

However, the invention in the cited document 1 has the problem that the storage elastic modulus of the film significantly depends on the temperature

Particularly a biaxially oriented polypropylene film which is provided for use in capacitors is required to have structural stability to heat during processing of a capacitor element and under a capacitor use environment, and temperature dependency stability of the storage elastic modulus in the film width direction is important particularly for improving voltage resistance at a high temperature.

However, a film having high temperature dependency of the storage elastic modulus has the problem that during processing of an element or in use of the film as a capacitor, molecular chain orientation in the film is relaxed to cause capacity reduction and short-circuit breakage.

In this respect, in the invention in the cited document 1, a production method/technique in which a low-stereoregularity raw material is used, and a heat treatment is not performed is employed, and therefore the film has high temperature dependency of the storage elastic modulus. Thus, in the invention in the cited document 1, the problem of high temperature dependency of the storage elastic modulus in the film is an essential problem.

Here, for stabilizing the temperature dependency of the storage elastic modulus in the film, the draw ratio may be set to a high value during film formation. However, when the draw ratio is set to a high value, the film may be broken during film formation to deteriorate productivity, or the thermal shrinkage ratio, which is a characteristic contradictory to rigidity of the film, tends to increase. Accordingly, the capacity of a capacitor at a high temperature decreases in practical use, and dimensional stability at a high temperature is not necessarily sufficient.

Even with the techniques described in Patent Documents 2, 3, 4 and 5, only films which are not capable of enduring a temperature in a capacitor use environment, and have high temperature dependency are obtained.

The present inventors have extensively conducted studies for solving the above-described problems, and resultantly devised the present invention. The present invention provides a biaxially oriented polypropylene film which is capable of exhibiting excellent voltage resistance and reliability at a high temperature even when used in high-voltage capacitors, and which is suitable for use in the capacitors etc. and has low temperature dependency of the storage elastic modulus.

SOLUTIONS TO THE PROBLEMS

The object described above can be achieved by biaxially oriented polypropylene film according to the invention as defined in claim 1. Embodiments of the invention are presented in the dependent claims.

EFFECTS OF THE INVENTION

According to the present invention, there can be provided a biaxially oriented polypropylene film having low temperature dependency of the storage elastic modulus, and the biaxially oriented polypropylene film can be used in various applications such as packaging applications, tape applications, and electrical applications including cable wrappings and capacitors, and is suitable particularly for use in capacitors, preferably for use in automobiles, solar power generation and wind power generation. Particularly, according to the present invention, there can be provided a biaxially oriented polypropylene film which exhibits excellent voltage resistance and reliability at a high temperature when used in high-voltage capacitors.

EMBODIMENTS OF THE INVENTION

In a biaxially oriented polypropylene film according to the present invention, it is important that a relationship between the storage elastic modulus (E'23) at 23°C and the storage elastic modulus (E'125) at 125°C in the film width direction in solid viscoelasticity measurement satisfies the following expression.

$$(E'125)/(E'23) > 0.2$$

When the value of (E'125)/ (E'23) is 0.2 or less, the film has high temperature dependency of the storage elastic modulus . In other words, when the film is used as a capacitor under a high-temperature environment, molecular chains in the film itself are relaxed to reduce voltage resistance, so that the problem of capacitor capacitance reduction or short-circuit breakage easily occurs.

From the above-described point of view, the value of (E'125)/ (E' 23) may be preferably 0.25 or more, more preferably 0.30 or more. The present inventors have extensively conducted studies, and resultantly found that there is a high correlation between the temperature dependency of the storage elastic modulus in the film width direction and the voltage resistance characteristic of the capacitor at a high temperature, and it is important to perform control to reduce the temperature dependency of the storage elastic modulus for improvement of high-temperature voltage resistance and reliability as capacitor characteristics. Here, the temperature dependency of the storage elastic modulus of the biaxially oriented polypropylene film of the present invention in the width direction can be reduced by setting the area ratio to 40 or more in biaxial stretching (biaxial orientation) of the polypropylene film, and first subjecting the film to a heat treatment at a temperature lower than the width-direction stretching temperature, and then subjecting the film to a heat treatment at a temperature higher than the above-mentioned treatment temperature and lower than the width-direction stretching temperature during biaxial stretching in heat treatment and relaxation treatment steps after stretching as described later. Accordingly, the above-described expression can be satisfied. The upper limit of (E'125)/(E'23) is not particularly limited, but it is preferably 0.8 or less. When the value of (E' 125) / (E' 23) is to be made more than 0. 8, it is necessary to increase the draw ratio during film formation, and in this case, a problem may arise in terms of film formation stability such that breakage is induced.

In the biaxially oriented polypropylene film according to the present invention, the loss tangent at 23°C (tanδ23) in the film width direction in solid viscoelasticity measurement is preferably 0.08 or less. The loss tangent (tanδ) is a ratio of a storage elastic modulus (E') and a loss elastic modulus (E") which is obtained in solid viscoelasticity measurement. The loss tangent is a coefficient derived from (tanδ) = (E") / (E'). In other words, a small loss tangent (tanδ) suggests that molecular mobility is suppressed, and when the film is used as a capacitor, an effect of improving high-temperature voltage resistance and reliability as capacitor characteristics is easily obtained. The value of (tanδ23) is more preferably 0.07 or less, further preferably 0.06 or less. The lower limit of (tanδ23) is not particularly limited, but it is preferably 0.01. When the value of (tanδ23) is to be made less than 0.01, it is necessary to increase the draw ratio during film formation, and in this case, a problem may arise in terms of film formation stability such that breakage is induced. Here, the loss tangent (tanδ23) at 23°C in the film width direction can be made not more than 0. 08 by setting the area ratio to 40 or more in biaxial stretching (biaxial orientation) of the polypropylene film, or more preferably, first subjecting the film to a heat treatment at a temperature lower than the width-direction stretching temperature, and then subjecting the film to a heat treatment at a temperature higher than the above-mentioned treatment temperature and lower than the width-direction stretching temperature during biaxial stretching in heat treatment and relaxation treatment steps after stretching as described later.

In the biaxially oriented polypropylene film according to the present invention, the stress (TD-F5 value) at an elongation of 5% in the film width direction is preferably 100 MPa or more. When the TD-F5 value is less than 100 MPa, the problem may arise that the voltage resistance of the film is reduced, a winding performance failure occurs such that the film is creased in a step of forming a metal layer by vapor deposition, and winding processing of capacitor element, or creases cause ingress of air to reduce the voltage resistance of the capacitor. From the above-described point of view, the TD-F5 value is preferably 105 MPa or more, more preferably 110 MPa or more, further preferably 115 MPa or more. The upper limit of the TD-F5 value is not particularly limited, but it is 150 MPa from the viewpoint of film formation stability. The TD-F5 value can be made not less than 100 MPa by setting the area ratio to 40 or more in biaxial stretching (biaxial orientation) of the polypropylene film, and first subjecting the film to a heat treatment at a temperature lower than the width-direction stretching temperature, and then subjecting the film to a heat treatment at a temperature higher than the above-mentioned treatment temperature and lower than the width-direction stretching temperature during biaxial stretching in heat treatment and relaxation treatment steps after stretching as described later.

For ensuring that the biaxially oriented polypropylene film according to the present invention exhibits element processability and further increased heat resistance as a capacitor while process conditions require a higher temperature in preparation of capacitors, the thermal shrinkage ratio in the film width direction in the heating treatment at 125°C for 15 minutes is 1% or less, more preferably 0.8% or less, further preferably 0.6% or less. When the thermal shrinkage ratio is more than 1%, the film itself may be shrunk by heat in the capacitor production process and use process to deteriorate voltage resistance due to poor contact with an element end metallikon. The lower limit of the thermal shrinkage ratio is not particularly limited, but when the film is excessively expanded, the rolled state of the element may slack by heat in the capacitor production process and use process, and therefore the lower limit of the thermal shrinkage ratio is preferably -1%. The thermal shrinkage ratio of the film in the width direction can be made not more than 1% by first performing a relaxation treatment while subjecting the film to a heat treatment at a temperature lower than the width-direction stretching temperature, and then subjecting the film to a heat treatment at a temperature higher than the above-mentioned treatment temperature and lower than the width-direction stretching temperature during biaxial stretching in heat treatment and relaxation treatment steps after biaxially stretching (biaxially orienting) the polypropylene film as described later.

Linear polypropylene that is preferably used in the biaxially oriented polypropylene film according to the present invention will now be described. Linear polypropylene is usually used in packaging materials and capacitors, and is preferably polypropylene having a cold xylene-soluble content (hereinafter, referred to as CXS) of 4% by mass or less, and a mesopentad fraction of 0.95 or more. When these conditions are not satisfied, film production stability may be deteriorated, or voids may be formed in a film in production of a biaxially oriented film, so that dimensional stability and voltage resistance may be considerably deteriorated.

Here, the cold xylene-soluble content (CXS) refers to a polypropylene component which is dissolved in xylene when a film is fully dissolved in xylene, and then precipitated at room temperature, and this component may correspond to a component which is hard to be crystallized because it has low stereoregularity, a low molecular weight or the like. When such a component is contained in a large amount in a resin, the problem may arise that the film has poor thermal dimensional stability, the storage elastic modulus at a high temperature is reduced, and the dielectric breakdown voltage is reduced. Accordingly, the CXS is preferably 4% by mass or less, further preferably 3% by mass or less, especially preferably 2% by mass or less. For obtaining linear polypropylene having such a CXS as described above, a method can be used such as a method in which a catalytic activity in preparation of a resin is enhanced, or a method in which the resulting resin is washed with a solvent or a propylene monomer itself.

From the same point of view, the mesopentad fraction of linear polypropylene is preferably 0.95 or more, further preferably 0.97. The mesopentad fraction is an index showing stereoregularity of a polypropylene crystal phase as measured by a nuclear magnetic resonance method (NMR method), and this value is preferably high because when the value increases, the crystallinity increases, the melting point increases, the storage elastic modulus at a high temperature is maintained, and the dielectric breakdown voltage increases. The upper limit of the mesopentad fraction is not particularly specified. For obtaining a resin having high stereoregularity as described above, a method in which the resulting resin powder is washed with a solvent such as n-heptane, a method in which a catalyst and/or a co-catalyst, and a composition are appropriately selected, or the like is preferably employed.

The linear polypropylene is mainly composed of a homopolymer of propylene, and may contain a copolymerization component from other unsaturated hydrocarbon, etc., or may be blended with a polymer that is not a homopolymer of propylene within the bounds of not hindering the purpose of the present invention. Examples of the monomer component that forms a copolymerization component or a blend as described above include ethylene, propylene (in the case of a copolymerized blend), 1-butene, 1-pentene, 3-methylpentene-1,3-methylbutene-1,1-hexene, 4-methylpentene-1,5-ethylhexene-1, 1-octene, 1-decene, 1-dodecene, vinylcyclohexene, styrene, allylbenzene, cyclopentene, norbornene and 5-methyl-2-norbornene. The copolymerization amount or blend amount is preferably less than 1 mol% for the copolymerization amount, and less than 10% by mass for the blend amount from the viewpoint of the dielectric breakdown resistance characteristic and dimensional stability.

Various additives, for example nucleating agents, antioxidants, heat stabilizers, lubricants, antistatic agents, antiblocking agents, fillers, viscosity modifiers and coloring inhibitors may be included in the linear polypropylene within the bounds of not hindering the purpose of the present invention.

Selection of the type and added amount of the antioxidant, among the above-mentioned additives, is important from the viewpoint of long-term heat resistance. Specifically, such antioxidants are preferably phenol-based antioxidants with steric hindrance, at least one of which is a high-molecular-weight-type antioxidant having a molecular weight of 500 or more. Specific examples thereof include various kinds of antioxidants, and it is preferable that for example, 2,6-di-t-butyl-p-cresol (BHT; molecular weight: 220.4) is used in combination with 1,3,5-trimethyl-2,4,6-tris(3,5-di-t-butyl-4-hydroxybenzyl)b enzene (e.g. Irganox (registered trademark) 1330 manufactured by BASF Company; molecular weight: 775.2), tetrakis[methylene-3-(3,5-di-t-butyl-4-hydroxyphenyl)propio nate]methane (e.g. Irganox (registered trademark) 1010 manufactured by BASF Company; molecular weight: 1177.7), or the like. The total content of these antioxidants is preferably 0. 03 to 1. 0% by mass based on the total amount of polypropylene. When the amount of the antioxidants is excessively small, the film may be poor in long-term heat resistance. When the amount of the antioxidants is excessively large, the capacitor element may be negatively influenced by blocking under a high temperature due to bleed-out of the antioxidants. The content of the antioxidants is preferably 0.1 to 0.9% by mass, especially preferably 0.2 to 0.8% by mass.

The biaxially oriented polypropylene film according to the present invention may contain branched polypropylene from the viewpoint of a high voltage characteristic, and when branched polypropylene is added, the content thereof is preferably 0.05 to 10% by mass, more preferably 0.5 to 8% by mass, further preferably 1 to 5% by mass. When the biaxially oriented polypropylene film contains the branched polypropylene, the size of spherical crystals generated in a step of cooling a melt-extruded resin sheet can be controlled to be small, and generation of insulating defects that are generated in a stretching step can be kept low to obtain a polypropylene film excellent in voltage resistance.

In the present invention, a nucleating agent can be added within the bound of not contradicting the purpose of the present invention. As mentioned above, the branched polypropylene itself has an $\alpha$-crystal or $\beta$-crystal nucleating agent effect, but other types of $\alpha$-crystal nucleating agents (dibenzylidene sorbitols, sodium benzoate and so on), and $\beta$-crystal nucleating agents (potassium 1,2-hydroxystearate, magnesium benzoate, amide-based compounds such as N,N'-dicyclohexyl-2,6-naphthalenedicarboxamide, quinacridone-based compounds and so on) are shown as examples. However, excessive addition of the other types of nucleating agents may cause deterioration of stretchability and reduction of voltage resistance due to void formation etc., and therefore the added amount thereof is usually 0.5% by mass or less, preferably 0.1% by mass or less, further preferably 0.05% by mass or less.

The biaxially oriented polypropylene film according to the present invention has low temperature dependency of the storage elastic modulus, and is therefore excellent in voltage resistance at a high temperature. Thus, the biaxially oriented polypropylene film is useful for general capacitors of 15 $\mu$m or less, and useful for capacitors of preferably 10 $\mu$m or less, further preferably 6 $\mu$m or less. The biaxially oriented polypropylene film is suitable particularly for use in thin film capacitors required in automobile applications (including hybrid car applications), which are used under a high-temperature environment. Particularly when the thickness of the film is 0.5 $\mu$m or more and less than 3 pm, its performance is effectively exhibited. The thickness of the film is more preferably 0.8 $\mu$m or more and less than 2.8 $\mu$m, further preferably 1 $\mu$m or more and less than 2.6 $\mu$m.

The biaxially oriented polypropylene film according to the present invention is preferably used as a dielectric film for capacitors, but is not limited by a capacitor type. Specifically, the biaxially oriented polypropylene film may be used for either foil-rolled capacitors or metal vapor deposition film capacitors in terms of an electrode structure, or for oil-impregnated capacitors impregnated with an insulating oil, or dry capacitors which do not include an insulating oil at all. The biaxially oriented polypropylene film may be of wound type or laminated type in terms of a shape. In particular, the biaxially oriented polypropylene film is preferably used particularly as a metal vapor deposition film capacitor in view of the characteristics of the film according to the present invention.

A polypropylene film usually has low surface energy, and is thus hard to be subjected to metal vapor deposition stably, and therefore it is preferable to subject the polypropylene film to a surface treatment beforehand for the purpose of improving the metal adhesion strength. Specific examples of the surface treatment include a corona discharge treatment, a plasma treatment, a glow treatment and a flame treatment. The surface wet tension of a polypropylene film is usually about 30 mN/m, and it is preferable that the polypropylene film is made to have a wet tension of 37 to 50 mN/m, preferably about 39 to 48 mN/m by the surface treatment because excellent adhesion with a metal film is obtained, and the preservation property is improved.

The biaxially oriented polypropylene film according to the present invention is obtained by performing biaxial stretching while using raw materials capable of imparting the above-mentioned characteristics. The biaxial stretching method may be any of an inflation simultaneous biaxial stretching method, a tenter simultaneous biaxial stretching method and a tenter sequential biaxial stretching method, and among them, a tenter sequential biaxial stretching method is preferably employed in view of controlling film formation stability and thickness uniformity, temperature dependency of the storage elastic modulus and thermal dimensional stability.

A method for producing the biaxially oriented polypropylene film according to the present invention will now be described. First, a polypropylene resin is melted and extruded onto a support to obtain a polypropylene resin sheet, the polypropylene resin sheet is stretched in the longitudinal direction, then stretched in the width direction to be sequentially biaxially stretched, and then subjected to a heat treatment and a relaxation treatment to produce a biaxially oriented polypropylene film. Here, it is important that in the heat treatment and relaxation treatment steps after biaxial stretching, the film is first heat-treated at a temperature lower than the width-direction stretching temperature (first-stage heat treatment step), and the film is then heat-treated at a temperature higher than the above-mentioned treatment temperature and lower than the width-direction stretching temperature during biaxial stretching (second-stage heat treatment step). Hereinafter, this method will be described more in detail, but the method in the present invention is not limited thereto.

First, high-melt-tension polypropylene (branched polypropylene) is blended with linear polypropylene, the resulting blend is melted and extruded, and caused to pass through a filter, then extruded from a slit-shaped mouthpiece at a temperature of 230 to 260°C, and solidified on a cooling drum controlled to a temperature of 60 to 110°C, so that an unstretched sheet is obtained. As a method for bringing the film into close contact with a casting drum, any of a static electricity application method, a close-contact method using a surface tension of water, an air knife method, a press roll method and an underwater casting method may be used, and an air knife method which ensures satisfactory flatness and is capable of controlling surface roughness is preferable. The temperature of the air knife is 0 to 100°C, preferably 20 to 70°C, the blown air speed is preferably 130 to 150 m/s, and it is preferable to employ a double tube structure for improving uniformity in the width direction. Preferably, the position of the air knife is appropriately adjusted so that air flows to the film formation downstream side to prevent vibrations of the film.

Next, the unstretched film is biaxially stretched to be biaxially oriented. First, the unstretched film is preheated by passing between rolls kept at 120 to 150°C, and subsequently the sheet is kept at a temperature of 130°C to 150°C, stretched at a draw ratio of 2 to 12, preferably 4 to 10, more preferably 5 to 9 in the longitudinal direction, and cooled to room temperature. The stretching method and the draw ratio are not particularly limited, and are appropriately selected according to the characteristics of a polymer to be used.

The film uniaxially stretched in the longitudinal direction is then guided to a tenter, the edge of the film is held by a clip, and the film is stretched at a draw ratio of 7 to 13, more preferably 9 to 12 in the width direction at a temperature of 140 to 165°C (width-direction stretching temperature).

Here, the area ratio is preferably 40 or more. In the present invention, the area ratio is a value obtained by multiplying the draw ratio in the longitudinal direction by the draw ratio in the width direction. The area ratio is more preferably 50 or more, especially preferably 60 or more. When the area ratio is in a range as described above, an effect of increasing the TD-F5 value of the film, reducing the loss tangent (tan$\delta$23) at 23°C in the film width direction, improving the voltage resistance of the film, and improving the voltage resistance of the capacitor is obtained. The upper limit of the area ratio is not particularly limited, but it is preferably 100 or less from the viewpoint of film formation stability.

In the present invention, for reducing the temperature dependency of the storage elastic modulus, and improving thermal dimensional stability and the voltage resistance characteristic of the film, it is important that in the subsequent heat treatment and relaxation treatment steps, a multistage type heat treatment is performed in the following manner: the film is subjected to heat setting (first-stage heat treatment) at a temperature (first-stage heat treatment temperature) of not lower than 115°C and not higher than 140°C while the film is relaxed by 2 to 20% in the width direction with the film tensely held by a clip in the width direction, and the film is then subjected to heat setting (second-stage heat treatment) at a temperature higher than the heat setting temperature (first-stage heat treatment temperature) and lower than the width-direction stretching temperature with the film tensely held by the clip again in the width direction.

In the relaxation treatment, the relaxation ratio is more preferably 5 to 18%, further preferably 8 to 15% for improving thermal dimensional stability. When the relaxation ratio is more than 20%, the film may excessively slack in the tenter to crease a product, leading to occurrence of unevenness during vapor deposition. On the other hand, when the relaxation ratio is less than 2%, it may be unable to obtain sufficient thermal dimensional stability, thus causing capacity reduction and short-circuit breakage under a high-temperature use environment when the film is used as a capacitor.

The first-stage heat treatment temperature is preferably not lower than 115°C and not higher than 140°C, more preferably not lower than 120°C and not higher than 138°C, further preferably not lower than 125°C and not higher than 135°C so that molecular chain orientation during stretching can be maintained and the storage elastic modulus can be increased. A heat treatment temperature that is lower than 115°C may cause capacity reduction and short-circuit breakage in capacitor characteristics under a high-temperature environment. On the other hand, when the heat treatment temperature is higher than 140°C, relaxation of molecular chain orientation formed by stretching may progress, leading to an increase in temperature dependency of the storage elastic modulus.

When the second-stage heat treatment temperature is higher than the first-stage heat treatment temperature and lower than the width-direction stretching temperature, a amorphous molecular chain with high mobility, which is not sufficiently relaxed in the first-stage heat treatment, can be relaxed. As a result, a decrease in the storage elastic modulus in a high temperature range can be suppressed to reduce the temperature dependency of the storage elastic modulus. From this point of view, the second-stage heat treatment temperature is preferably not lower than [(first-stage heat treatment temperature) + 5°C] and not higher than [(width-direction stretching temperature) - 5°C], further preferably not lower than [(first-stage heat treatment temperature) + 8°C] and not higher than [(width-direction stretching temperature) - 8°C] .

After passing through the multistage heat treatment, the film is caused to pass through a cooling step at 80 to 100°C, and guided to the outside of the tenter with the film tensely held by the clip in the width direction, the film edge is released from the clip, and in the winder step the film is slit at the edge and wound up as a film product roll. Here, it is preferable that before the film is wound up, a surface to be metallized is subjected to a corona discharge treatment in air, nitrogen, a carbon dioxide gas or a mixed gas thereof for improving adhesion with a metal to be vapor-deposited.

Production conditions that are particularly important for obtaining the film according to the present invention are the following conditions.

- The first-stage heat treatment temperature is not lower than 115°C and not higher than 140°C.
- The first-stage heat treatment temperature is lower than the width-direction stretching temperature.
- The second-stage heat treatment temperature is higher than the first-stage heat treatment temperature.
- The second-stage heat treatment temperature is lower than the width-direction stretching temperature.
- The film is relaxed by 3 to 12% in the first-stage heat treatment step.

It is more preferable that in addition, the following condition is satisfied.

- The area ratio is 40 or more (especially preferably 60 or more) .

A metal layer lamination film produced using the biaxially oriented polypropylene film according to the present invention, and a film capacitor using the metal layer lamination film will now be described.

The metal layer lamination film according to the present invention is a metal layer lamination film in which a metal layer is provided on at least one surface of the biaxially oriented polypropylene film according to the present invention.

In the present invention, the method for obtaining a metal layer lamination film by providing a metal layer on a surface of the biaxially oriented polypropylene film as described above is not particularly limited, and for example, a method is preferably used in which on at least one surface of a polypropylene film, aluminum is vapor-deposited to provide a metal layer such as an aluminum vapor deposition film which serves as an internal electrode of a film capacitor. Here, other metal components such as, for example, nickel, copper, gold, silver, chromium and zinc can be vapor-deposited simultaneously with or successively to aluminum. A protective layer can be provided on a vapor deposition film using an oil or the like.

In the present invention, the metal layer lamination film can be annealed or heat-treated at a specific temperature as necessary after formation of the metal layer. For insulation or other purposes, at least one surface of the metal layer lamination film can be coated with polyphenylene oxide etc.

The film capacitor according to the present invention is a film capacitor produced using a metal layer lamination film obtained in this manner. Specifically, a film capacitor can be obtained by laminating or rolling the metal layer lamination film according to the present invention using various methods. An example of a preferred method for producing a rolled film capacitor is as follows.

Aluminum is vapor-deposited on one surface of a polypropylene film under a reduced pressure. Here, aluminum is vapor-deposited in a stripe shape having margin sections running in the film longitudinal direction. Next, the film is slit with a blade put to the center of each vapor deposition section and to the center of each margin section on a surface, so that tape-shaped winding reels with a surface having a margin on one side are prepared. In this way, tape-shaped winding reels having a margin on the left or on the right are prepared, and one tape-shaped winding reel having a margin on the left and one tape-shaped winding reel having a margin on the right are rolled with the two sheets overlapping each other in such a manner that the vapor deposition section protrudes from the margin section in the width direction, so that a rolled body is obtained.

When aluminum is vapor-deposited on both surfaces, aluminum is vapor-deposited in a stripe shape having margin sections running in the longitudinal direction on one surface, and on the other surface, aluminum is vapor-deposited in a stripe shape in such a manner that margin sections in the longitudinal direction are each situated at the center of the back-side vapor deposition section. Next, the film is slit with a blade put to the center of each margin section on each of the front and back surfaces, so that tape-shaped winding reels with both surfaces each having a margin on one side (e.g. the front surface has a margin on the right side, and the back surface has a margin on the left side) are prepared. One of the obtained reels and one non-deposited mate film are rolled with the two sheets overlapping each other in such a manner that the metallized film protrudes from the mate film in the width direction, so that a rolled body is obtained.

A core material is removed from the rolled body prepared in the manner described above, the rolled body is pressed, a metallikon is thermally sprayed to both end surfaces to obtain an external electrode, and a lead is welded to the metallikon to obtain a rolled film capacitor. Film capacitors are used in a wide range of applications including railway vehicles, automobiles (e.g. hybrid cars and electric cars), solar power generation/wind power generation applications and general consumer electrical appliances, and the film capacitor according to the present invention can also be suitably used in these applications. In addition, the biaxially oriented polypropylene film can be used in various applications including packaging films, mold release films, process films, sanitary goods, agricultural articles, building articles, medical articles and so on.

Methods for measurement of characteristic values and methods for evaluation of effects in the present invention are as follows.

(1) Temperature dependency of storage elastic modulus in width direction ((E'125)/(E'23)) and loss tangent at 23°C (tan$\delta$23)

Measurement was performed under the following conditions. A test piece (having a width of 5 mm (short side) and a length of 20 mm (long side)) cut out from a biaxially oriented polypropylene film with the film width direction as the long side direction was attached to an apparatus chuck section under a 23°C atmosphere, and temporarily cooled to -60°C, and measurement was started at the time when the temperature reached -50°C after the start of elevation of the temperature. A viscoelasticity-temperature curve was drawn in accordance with a dynamic viscoelasticity method, a storage elastic modulus (E'23) at 23°C and a storage elastic modulus (E'125) at 125°C were each read, and a relationship of (E'125)/(E'23) was calculated. The test was conducted three times, and the average thereof was defined as a storage elastic modulus.

A viscoelasticity-temperature curve was drawn in accordance with a dynamic viscoelasticity method, a storage elastic modulus (E'23) and a loss elastic modulus (E"23) were each read, and the loss tangent at 23°C (tan$\delta$23) was calculated from the following equation.

$$(\tan\delta23) = (E''23)/(E'23)$$

Apparatus : Rheogel-E4000 (manufactured by UBM Ltd.)
Geometry : Tension
Inter-chuck distance : 10 mm
Frequency : 10Hz
Distortion : 0.1 to 0.2%
Temperature range : -50 to 150°C
Temperature elevation rate : 3°C/minute
Measurement atmosphere : nitrogen

(2) Thickness of film

The film thickness of a biaxially oriented polypropylene film was measured at total ten randomly selected spots under a 23°C and 65% RH atmosphere with a needle pressure of 30 g using a contact-type electronic micrometer (model: K-312A) manufactured by Anritsu Corporation, and the average thereof was defined as a thickness of the biaxially oriented polypropylene film.

(3) Stress at elongation of 5% in width direction (TD-F5 value)

A biaxially oriented polypropylene film was cut to a rectangular shape having a test-direction length of 150 mm (long side) x a width of 10 mm (short side) , and the piece thus obtained was used as a sample. Here, the sample was cut out in such a manner that the width direction of the biaxially oriented polypropylene film coincided with the long side direction of the sample. A tension test for the film was conducted with the initial inter-chuck distance set to 50 mm and the tension speed set to 300 mm/minute using a tension tester (Tensilon AMF/RTA-100 manufactured by ORIENTEC CORPORATION). The load applied to the film at the time of elongation of the sample by 5% was read, and divided by the cross-sectional area (film thickness x width (10 mm)) of the sample before the test, and the value thus obtained was defined as a stress at an elongation of 5%. The measurement was made five times for each sample, and based on the average thereof, evaluation was performed.

The thickness of the film to be used for calculation of the TD-F5 value was measured in the following manner. A sample was cut out in a rectangular shape of 150 mm (length) x 10 mm (width), the thickness of the sample was measured at five randomly selected spots within the initial inter-chuck distance of 50 mm with a needle pressure of 30 g using a contact-type electronic micrometer (model: K-312A) manufactured by Anritsu Corporation, and the average thereof was used.

(4) Thermal shrinkage ratio in heating treatment at 125°C for 15 minutes in width direction

Five samples each having a width (short side) of 10 mm and a length (long side) of 200 mm (measurement direction) were cut out in the width direction of a film. Specifically, the sample was cut out in such a manner that the width direction of the biaxially oriented polypropylene film coincided with the long side direction of the sample. The sample was then marked at positions of 25 mm from both ends of the long side of the sample to obtain a test length of 150 mm ($l_0$) . Next, the sample was sandwiched by a paper, and heated for 15 minutes in a no-load state in an oven kept at 120°C, the sample was then taken out, and cooled at room temperature, the size ($l_1$) was then measured to determine the thermal shrinkage ratio from the following equation, and the average for five samples was defined as a thermal shrinkage ratio.

$$\text{Thermal shrinkage ratio} = \{(l_0 - l_1)/l_0\} \times 100 \ (\%)$$

(5) Film dielectric breakdown voltage (V/ $\mu$m)

In accordance with JIS C2330(2001)7.4.11.2 B method (parallel plate electrode method), the average was determined, and divided by the measured film thickness of the sample (in (2)), and the value thus obtained was expressed in a unit of V/$\mu$m.
The film dielectric breakdown voltage is preferably high.

(6) Evaluation of vapor deposition capacitor characteristics (voltage resistance and reliability at 105°C)

On a film obtained in each of examples and comparative examples as described later, aluminum was vapor-deposited in a vacuum vapor deposition machine manufactured by ULVAC, Inc. to form a vapor deposition pattern including so-called a T-shaped margin pattern having a film resistance of 8 $\Omega$/sq and provided with a margin section in a direction vertical to the longitudinal direction, so that a vapor deposition reel having a width of 50 mm was obtained.

Using the reel, a capacitor element was then wound up by an element winder (KAW-4NHB) manufactured by KAIDO MFG. CO., LTD., and was subjected to metallikon, and then heat-treated at a temperature of 105°C for 10 hours, and a lead was attached to finish the capacitor element.

Using ten capacitor elements prepared in this manner, so-called a step-up test was conducted, the step-up test including repeating a process in which a voltage of 300 VDC is applied to the capacitor element at a high temperature of 105°C, and after elapse of 10 minutes with the same voltage, the applied voltage is gradually increased stepwise at 50 VDC for a minute. A change in electrostatic capacity here was measured and plotted on a graph, a voltage at which the capacity decreased to 70% of the initial value was divided by the film thickness (in (2)), and the value thus obtained was evaluated as voltage resistance . Samples having a voltage resistance of 450 V/$\mu$m or more were determined to be usable. The voltage was increased until the electrostatic capacity decreased to 10% or less of the initial value, the capacitor element was then disassembled to examine the state of rupture, and the preservation property (reliability) was evaluated as below.

AA: The element shape is not changed, and piercing rupture is not observed.
A: The element shape is not changed, and piercing rupture is observed in 10 or less film layers.
B: The element shape is changed, or piercing rupture is observed in more than 10 film layers.
C: The element shape is ruptured.

AA shows that the capacitor element can be used without problems, and A shows that the capacitor element can be used depending on conditions. B and C show that there arises a problem in practical use.

EXAMPLES

Hereinafter, the effect of the present invention will be further described by way of examples. Example 3 is included for information only.

(Example 1)

1.0% by mass of a branched polypropylene resin (high-melt-tension polypropylene Profax PF-814) manufactured by Basell Company was blended with linear polypropylene: a polypropylene resin manufactured by Prime Polymer Co., Ltd., which had a mesopentad fraction of 0.985 and a melt flow rate (MFR) of 2.6 g/10 minutes. The resulting blend was fed into an extruder at a temperature of 260°C, and melted and extruded in a sheet shape from a T-shaped slit die at a resin temperature of 260°C, and the molten sheet was brought into close contact with a casting drum kept at 90°C using an air knife, so that the molten sheet was cooled and solidified to obtain an unstretched sheet. The sheet was then gradually preheated to 140°C by a plurality of rolls, subsequently kept at a temperature of 143°C, and caused to pass between rolls having a circumferential speed difference, so that the sheet was stretched at a draw ratio of 5.7 in the longitudinal direction. Subsequently, the film was guided to a tenter, stretched at a draw ratio of 10 in the width direction at a temperature of 160°C, then heat-treated at 130°C while being relaxed by 12% in the width direction as a first-stage heat treatment and relaxation treatment, and further heat-treated at 140°C while being held by a clip in the width direction as a second-stage heat treatment. Thereafter, the film was caused to pass through a cooling step at 100°C, and guided to the outside of the tenter, the film edge was released from the clip, a surface of the film (casting drum contact side) was then subjected to a corona discharge treatment in the air at a treatment intensity of 25 W.min/m$^2$, and a film having a film thickness of 2.3 $\mu$m was wound up as a film roll.
For the characteristics of the biaxially oriented polypropylene film and the capacitor characteristics in Example 1, excellent voltage resistance and reliability were exhibited as shown in Table 1.

(Examples 2 to 4 and Comparative Examples 1 to 5)

Except that the heat treatment temperature and conditions for the relaxation treatment after biaxial stretching were changed as described in Table 1 or Table 2, the same procedure as in Example 1 was carried out to prepare a polypropylene film. For the characteristics of the polypropylene films and the capacitor characteristics in Examples 2, 3 and 4, excellent voltage resistance was exhibited, and reliability was acceptable in use depending on conditions as shown in Table 1 or Table 2.
On the other hand, for the characteristics of the polypropylene films and the capacitor characteristics in Comparative Examples 1, 3, 4 and 5, voltage resistance was low, and the element shape was deformed to cause a problem in a practical use in terms of reliability as shown in Table 1 or Table 2.
For the characteristics of the biaxially oriented polypropylene films and the capacitor characteristics in Comparative Example 2, voltage resistance was low, and reliability was slightly degraded to cause a problem in practical use as shown in Table 1.

(Example 5)

After an unstretched sheet was prepared in the same manner as in Example 1, the sheet was gradually preheated to 145°C by a plurality of rolls, subsequently kept at a temperature of 145°C, and caused to pass between rolls having a circumferential speed difference, so that the sheet was stretched at a draw ratio of 6.0 in the longitudinal direction. Subsequently, the film was guided to a tenter, stretched at a draw ratio of 12 in the width direction at a temperature of 165°C, then heat-treated at 130°C while being relaxed by 10% in the width direction as a first-stage heat treatment and relaxation treatment, and further heat-treated at 140°C while being held by a clip in the width direction as a second-stage heat treatment. Thereafter, the film was caused to pass through a cooling step at 100°C, and guided to the outside of the tenter, the film edge was released from the clip, a surface of the film (casting drum contact side) was then subjected to a corona discharge treatment in the air at a treatment intensity of 25 W.min/m$^2$, and a film having a film thickness of 2.3 $\mu$m was wound up as a film roll. For the characteristics of the polypropylene film and the capacitor characteristics in this example, excellent voltage resistance and reliability were exhibited as shown in Table 2.

[Table 1]

EP 3 124 523 B1

[Table 1]

| | | | Example 1 | Example 2 | Example 3 | Comparative Examples 1 | Comparative Examples 2 | Comparative Examples 3 | Comparative Examples 4 |
|---|---|---|---|---|---|---|---|---|---|
| Width-direction stretching temperature | (°C) | | 160 | 160 | 160 | 160 | 160 | 160 | 160 |
| Heat treatment temperature and relaxation ratio in heat treatment step after biaxial stretching | First-stage : | Heat treatment temperature (oC) | 130 | 140 | 130 | 160 | 130 | 130 | 155 |
| | | Relaxation ratio(%) | 12 | 12 | 3 | 12 | 12 | 0 | 12 |
| | Second-stage: | Heat treatment temperature (oC) | 140 | 150 | 140 | 160 | 100 | 140 | 150 |
| (E' 125) / (E'23) | (-) | | 0.32 | 0.26 | 0.22 | 0.14 | 0 . 18 | 0.16 | 0.16 |
| (tanδ23) | (-) | | 0.059 | 0.066 | 0.069 | 0.082 | 0.078 | 0.081 | 0.082 |
| TD-F5 value | (MPa) | | 116 | 99 | 125 | 88 | 118 | 135 | 95 |
| Thermal shrinkage ratio at 125°C for 15 minutes | (%) | | 0.1 | 0.1 | 1.1 | -0.4 | 0.7 | 3.5 | -0.2 |
| Film thickness | (μm) | | 2.3 | 2.3 | 2.2 | 2.5 | 2.3 | 2.2 | 2.3 |
| Film dielectric breakdown voltage | (V/μm) | | 715 | 662 | 733 | 630 | 725 | 742 | 640 |
| Capacitor characteristics at 105°C | Voltage resistance (V/μm) | | 562 | 510 | 495 | 413 | 445 | 401 | 418 |
| | Reliability | | AA | A | A | C | B | C | C |

[Table 2]

| [Table 2] | | | Example 4 | Example 5 | Comparative Examples 5 |
|---|---|---|---|---|---|
| Width-direction stretching temperature | | (°C) | 160 | 165 | 160 |
| Heat treatment temperature and relaxation ratio in heat treatment step after biaxial stretching | First-stage: | Heat treatment temperature (°C) | 120 | 130 | 110 |
| | | Relaxation ratio (%) | 12 | 10 | 12 |
| | Second-stage: | Heat treatment temperature (°C) | 140 | 140 | 120 |
| (E'125) / (E'23) | | (-) | 0.23 | 0.38 | 0.11 |
| (tan$\delta$23) | | (-) | 0.066 | 0.051 | 0.084 |
| TD-F5 value | | (MPa) | 121 | 131 | 127 |
| Thermal shrinkage ratio at 125°c for 15 minutes | | (%) | 0.1 | 0.7 | 2.5 |
| Film thickness | | ($\mu$m) | 2.3 | 2.3 | 2.3 |
| Film dielectric breakdown voltage | | (V/$\mu$m) | 722 | 735 | 728 |
| Capacitor characteristics at 105°C | Voltage resistance | (v/$\mu$m) | 525 | 533 | 406 |
| | Reliability | | A | AA | C |

## Claims

1. A biaxially oriented polypropylene film a capacitor in which a relationship between the storage elastic modulus E'23 at 23°C and the storage elastic modulus E' 125 at 125°C in the film width direction in solid viscoelasticity measurement satisfies the following expression:

$$E'125/E'23 > 0.2,$$

the storage elastic moduli are measured as described in the specification; and
wherein the thermal shrinkage ratio in the film width direction in a heat treatment at 125°C for 15 minutes is 1% or less; and wherein the thickness of the film is 0.5 $\mu$m or more and less than 3 $\mu$m.

2. The biaxially oriented polypropylene film according to claim 1, wherein the stress TD-F5 value at an elongation of 5% in the width direction is 100 MPa or more.

3. A metal layer lamination film in which a metal layer is provided on at least one surface of the biaxially oriented polypropylene film according to claim 1 or 2.

4. A film capacitor which is produced using the metal layer lamination film according to claim 3.

## Patentansprüche

1. Biaxial gereckte Polypropylen-Folie für einen Kondensator, indem das Verhältnis zwischen dem elastischen Speichermodul E'23 bei 23 °C und dem elastischen Speichermodul E'125 bei 125 °C in Folienbreitenrichtung bei Messung der festen Viskoelastizität folgenden Ausdruck erfüllt:

$$E'125/E'23 > 0{,}2$$

wobei die elastischen Speichermoduln wie in der Patentschrift beschrieben gemessen werden; und

wobei das Wärmeschrumpfungsverhältnis in Folienbreitenrichtung bei 15-minütiger Wärmebehandlung bei 125 °C 1 % oder weniger beträgt; und

wobei die Dicke der Folie 0,5 $\mu$m oder mehr und weniger als 3 $\mu$m beträgt.

2. Biaxial gereckte Polypropylen-Folie nach Anspruch 1, wobei der Belastungs-TD-F5-Wert bei einer Dehnung von 5 % in Breitenrichtung 100 MPa oder mehr beträgt.

3. Metallschichtlaminatfolie, in der eine Metallschicht auf zumindest einer Oberfläche einer biaxial gereckten Polypropylen-Folie nach Anspruch 1 oder 2 bereitgestellt ist.

4. Folienkondensator, hergestellt unter Verwendung einer Metallschichtlaminatfolie nach Anspruch 3.

**Revendications**

1. Film de polypropylène orienté biaxialement pour un condensateur dans lequel une relation entre le module élastique de stockage E'23 à 23 °C et le module d'élasticité de stockage E'125 à 125°C dans la direction de largeur de film dans une mesure de viscoélasticité solide satisfait l'expression suivante :

$$E'125/E'23 > 0{,}2,$$

les modules d'élasticité de stockage sont mesurés comme décrit dans la description ; et

dans lequel le taux de retrait thermique dans la direction de largeur de film dans un traitement thermique à 125°C pendant 15 minutes est de 1 % ou moins ; et dans lequel l'épaisseur du film est de 0,5 $\mu$m ou plus et inférieure à 3 $\mu$m.

2. Film de polypropylène orienté biaxialement selon la revendication 1, dans lequel la valeur TD-F5 de contrainte à un allongement de 5 % dans la direction de largeur est de 100 MPa ou plus.

3. Film de stratification à couche métallique dans lequel une couche métallique est prévue sur au moins une surface du film de polypropylène orienté biaxialement selon la revendication 1 ou 2.

4. Condensateur à film qui est produit en utilisant le film de stratification à couche métallique selon la revendication 3.

**EP 3 124 523 B1**

**REFERENCES CITED IN THE DESCRIPTION**

**Patent documents cited in the description**

- EP 2168997 A
- EP 2617758 A
- JP H10156940 B
- DE 112008002985
- JP 2010280795 A
- JP 2003191324 A
- JP 2003105102 A
- JP 2006082383 A
- JP H10259257 B